# EUROPEAN PATENT SPECIFICATION

(11) **EP 2 974 950 B1**
(45) Date of publication and mention of the grant of the patent: **08.02.2017**
(21) Application number: 14194906.5
(22) Date of filing: 26.11.2014
(51) Int. Cl.: B62J 6/02, B62J 6/06, B62J 17/02, B62J 17/06

(54) **Saddle type vehicle**
Motorrad
Véhicule à selle

(30) Priority: 15.07.2014 JP 2014145287
(43) Date of publication of application: 20.01.2016
(73) Proprietor: Yamaha Hatsudoki Kabushiki Kaisha, Iwata-shi, Shizuoka 438-8501 (JP)
(72) Inventor: Takesako, Wahei, Iwata-shi, Shizuoka 438-8501 (JP)
(74) Representative: Grünecker Patent- und Rechtsanwälte PartG mbB

(56) References cited:
- EP-A1- 2 508 415
- JP-A- 2009 161 027

## Description

The present invention relates to a saddle type vehicle according to the preamble of independent claim 1. Such a saddle type vehicle can be taken from the prior art document JP-A-2009 161027 with a side cover to guide warm air to the driver's knees.

JP 2009-40395 A discloses a saddle type vehicle. This saddle type vehicle includes a frame, an exterior cover that covers the frame, and a seat supported by the frame via a housing box.

The frame of the saddle type vehicle includes a front frame and a rear frame. The front frame includes a head tube and a down frame that extends downwardly from the head tube.

The exterior cover of the saddle type vehicle includes a front frame cover that covers the periphery of the front frame. A main rider's legs are disposed in a space provided between the seat and the front frame cover. The front frame cover includes a front cover portion disposed in front of the head tube, a back cover portion connected to the front cover portion, and disposed behind the down frame, and a side cover portion connected to a side end portion of the back cover portion, and extending downwardly from over a front wheel to behind the rear end of the front wheel in a side view.

When the saddle type vehicle travels in state where it is raining or the road surface is wet, water flowing rearward along the side cover portion of the vehicle splatters from the side cover portion toward the rider (driver). The side cover portion of the conventional saddle type vehicle described in JP 2009-40395 A includes a guide portion that guides such water outwardly in the vehicle width direction.

The guide portion includes a first inner end edge extending from over the front wheel to behind the rear end of the front wheel in a side view and a first outer end edge extending from over the first inner end edge to behind the first inner end edge in a side view. The guide portion guides water from the first inner end edge toward the first outer end edge, and discharges the water rearward at a position distanced outwardly in the vehicle width direction from the rider's leg. The first outer end edge of the guide portion includes a first bent portion that extends forwardly and downwardly after extending rearward and downwardly. A portion of the water flowing along the guide portion splatters rearward from the first bent portion. The first bent portion is disposed relatively on the rear side so as to be located outside of the rider's leg in the vehicle width direction. Thus, when the first bent portion is provided, water is discharged rearward on a lateral side of the rider's leg, and thus the discharged water is unlikely to be directed toward the rider's leg, as compared with when the first outer end edge is located further to the front than the rider's leg and the first bent portion is not provided in the first outer end edge.

In order to further reduce water that splatters toward the rider's leg, it is desirable to reduce water that flows along the guide portion of the side cover portion. The water that flows along the guide portion of the side cover portion includes water that has splattered outwardly and rearward from the front wheel and has reached the side cover portion. In order to reduce such water, it is considered to locate the first inner end edge of the guide portion outside in the vehicle width direction so as to be separated from the front wheel.

However, if the first inner end edge of the guide portion is located outside in the vehicle width direction, it would be difficult to form the side cover portion into a shape to easily discharge water, because the dimension in the vehicle width direction from the first inner end edge to the first outer end edge is reduced. Particularly, as in the conventional saddle type vehicle described above, when the first bent portion is provided in the guide portion and thus a central portion of the guide portion in the up-down direction is located at the rear, it is difficult to form the side cover portion into the shape to easily discharge water. If it is difficult to discharge water outwardly in the vehicle width direction from the side cover portion, water is likely to be directed toward the rider's leg.

On the other hand, if the dimension in the vehicle width direction from the first inner end edge of the guide portion to the first outer end edge of the guide portion is increased and the distance in the vehicle width direction from the vehicle center to the first inner end edge of the guide portion is increased, the distance in the vehicle width direction from the vehicle center to the first outer end edge of the guide portion also increases, so that the vehicle width of the saddle type vehicle also increases.

It is an object of the present invention to provide a saddle type vehicle capable of suppressing an increase in vehicle width, while reducing water that splatters toward the rider's leg can be reduced. This object is achieved by the saddle type vehicle of claim 1. Preferred embodiments are laid down in the dependent claims.

In order to overcome the previously unrecognized and unsolved challenges described above, a preferred embodiment provides a saddle type vehicle including a frame, a steering device, a front wheel, an exterior cover, and a seat.

The frame includes a front frame including a head tube and a rear frame extending rearward from the front frame. The steering device is supported by the head tube. The front wheel is supported by the steering device. The exterior cover includes a front frame cover that covers a periphery of the front frame. The seat is supported by the rear frame such that the seat is disposed at a more rearward position than the steering device.

The front frame cover includes a front cover portion, a back cover portion, and a side cover portion. The front cover portion overlaps with the head tube in a front view and includes a side end located at a more outward position in a vehicle width direction than the head tube. The back cover portion is connected to the front cover portion. At least a portion of the back cover portion is located behind the head tube. The side cover portion is located outside of the steering device in the vehicle width direction and connected to at least one of the front cover portion and the back cover portion. At least a portion of the side cover portion extends downwardly from over the front wheel so as to be located behind the front wheel in a side view.

The side cover portion includes a first cover and a second cover. The first cover includes a guide portion. The guide portion includes a first inner end edge extending from over the front wheel to behind the front wheel and extending downwardly behind the front wheel in a side view, and a first outer end edge disposed at a more outward position in the vehicle width direction than the first inner end edge in a front view. The second cover is disposed outside of the guide portion in the vehicle width direction and overlaps with the first inner end edge of the guide portion in a side view.

The first outer end edge of the guide portion includes a first upper edge portion extending rearward from over the first inner end edge of the guide portion in a side view, a first bent portion connected to a rear end of the first upper edge portion and bent downwardly, and a first lower edge portion connected to a lower end of the first bent portion and extending downwardly to behind the first inner end edge of the guide portion in a side view.

The second cover includes a second inner end edge and a second outer end edge. The second inner end edge of the second cover extends from over the front wheel to behind the front wheel in a side view and extending downwardly behind the front wheel in a side view, and is located at a more outward position in the vehicle width direction than the first inner end edge of the guide portion in a front view. The second outer end edge of the second cover is disposed between the second inner end edge and the first outer end edge of the guide portion in a side view, and disposed at a more outward position in the vehicle width direction than the second inner end edge in a front view.

According to this arrangement, the second cover is provided so as to overlap with the first inner end edge of the guide portion of the first cover in a side view, and the second inner end edge of the second cover is located further on the outer side in the vehicle width direction than the first inner end edge of the guide portion. Therefore, water splattering outwardly and rearward from the front wheel is captured by the second cover. Water that reaches the guide portion of the side cover portion can thereby be reduced.

Also, because the second cover can capture water, it is not necessary to locate the first inner end edge of the guide portion outside in the vehicle width direction in order to capture more water splattering outwardly and rearward from the front wheel. Therefore, because the dimension in the vehicle width direction from the first inner end edge of the guide portion to the first outer end edge of the guide portion can be relatively large, the first cover can be formed into a shape to easily discharge water.

Water that reaches the guide portion of the first cover of the side cover portion can thus be reduced, and the first cover of the side cover portion can be formed into a shape to easily discharge water, so that water that is directed toward the rider's leg can be reduced.

Also, the second outer end edge of the second cover is located between the first outer end edge of the guide portion and the second inner end edge of the second cover in a side view, and the first outer end edge of the guide portion is not covered with the second cover in a side view. Thereby, the saddle type vehicle is unlikely to be increased in size in the vehicle width direction even if the second cover is provided. Accordingly, water that is directed toward the rider's leg can be reduced, and the saddle type vehicle can be made compact in the vehicle width direction.

In the preferred embodiment, the second outer end edge of the second cover may be located at a more inward position in the vehicle width direction than the first outer end edge of the guide portion in a front view. According to this arrangement, the saddle type vehicle can be made compact in the vehicle width direction.

In the preferred embodiment, the first bent portion of the first outer end edge of the guide portion may be disposed at a more rearward position than a rear end edge of the back cover portion in a side view.

According to this arrangement, because the first bent portion is disposed at the rear such that the first outer end edge of the guide portion intersects the rear end edge of the back cover portion in a side view, the first bent portion is disposed outside of the rider's leg in the vehicle width direction. Therefore, as compared to when the first bent portion is disposed in front of the rider's leg, water flowing rearward along the side cover portion is unlikely to be directed toward the rider's leg. Also, when the first bent portion is located at the rear and the first inner end edge of the guide portion is located outside in the vehicle width direction in order to increase a distance from the front wheel to the first inner end edge, it is particularly difficult to form the first cover into a shape to easily discharge water. However, in the preferred embodiment, the first inner end edge of the guide portion can be located relatively inside in the vehicle width direction and thus the first cover can be formed into a shape to easily discharge water.

In the preferred embodiment, the first bent portion may include an upper portion extending rearward in a side view and a lower portion extending downwardly and forwardly in a side view.

According to this arrangement, even when the first bent portion of the first outer end edge of the guide portion is located at the rear, the first lower edge portion of the first outer end edge of the guide portion can be located further at the front. A lower portion of the first cover can be thereby made close to the front wheel, and the layout performance of the vehicle body can be improved. Thus, for example, when the rider places his/her leg in the foot space or takes his/her leg out of the foot space, the first cover and the like is unlikely to serve as an obstacle. Moreover, even if the layout performance is thus improved, because the second cover is provided, water can be suppressed from reaching the guide portion. Further, because the first bent portion is located at the rear, water is unlikely to splash the rider.

In the preferred embodiment, the second inner end edge of the second cover may include a second upper edge portion extending rearward from over the front wheel in a side view, a second bent portion connected to a rear end of the second upper edge portion and bent downwardly, and a second lower edge portion extending downwardly behind the front wheel from the second bent portion in a side view such that the second lower edge portion approaches the front wheel as the second lower edge portion approaches a lower end of the second inner end edge.

Water kicked up by the front wheel falls due to gravity, while splattering rearward. The second lower edge portion of the second inner end edge of the second cover approaches to the front wheel as it approaches to the lower end of the second inner end edge. Thus, the second cover can efficiently capture water splattering rearward from the front wheel, and water that reaches the guide portion of the first cover can be reduced.

In the preferred embodiment, the first upper edge portion of the first outer end edge of the guide portion may be disposed at a more outward position in the vehicle width direction than a lower end of the second cover.

A portion of the water flowing along the guide portion of the first cover splatters from the first upper edge portion of the guide portion toward a position higher than the rider's knee. In this arrangement, because the first upper edge portion is disposed relatively on the outer side, it is easy to discharge water directed toward a position higher than the rider's knee from the first upper edge portion of the first outer end edge of the guide portion, toward the outer side in the vehicle width direction. Thus, water that splatters toward a position higher than the rider's knee can be reduced.

In the preferred embodiment, the first cover may further include an upper portion and a lower portion each partially covered with the second cover in a side view. In this case, an exposed area of the upper portion in a side view may be greater than an exposed area of the lower portion in a side view.

According to this arrangement, because the second cover needs not entirely cover the upper portion of the first cover, the second cover can be made compact. On the other hand, because the lower portion of the first cover is covered with the second cover and water flowing down from the upper portion of the first cover is likely to gather in the lower portion, water that splatters toward the rider's leg can be efficiently reduced.

In the preferred embodiment, the guide portion includes a first inclined portion that extends rearward in a direction away from the vehicle center, and a second inclined portion that extends rearward from the first inclined portion to the first outer end edge of the guide portion in a direction away from the vehicle center. In this case, an inclination angle of the second inclined portion with respect to vehicle center may be greater than an inclination angle of the first inclined portion with respect to the vehicle center.

According to this arrangement, water flowing rearward along the guide portion flows through the first inclined portion and the second inclined portion of the guide portion in this order, and is discharged rearward from the first outer end edge of the guide portion. Because the inclination angle of the second inclined portion with respect to the vehicle center is great, water flowing rearward along the guide portion is guided by the second inclined portion in a direction away from the rider's leg. Thus, water that is directed toward the rider's leg can be further reduced.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a saddle type vehicle according to a preferred embodiment.
FIG. 2 is a left side view of a front portion of the saddle type vehicle.
FIG. 3 is a front view of the saddle type vehicle.
FIG. 4 is a plan view of the front portion of the saddle type vehicle.
FIG. 5 is a left side view of a side cover portion.
FIG. 6 is a front view of the side cover portion.
FIG. 7 is a plan view of the side cover portion.
FIG. 8 is a left side view of a first cover of the side cover portion.
FIG. 9 is a front view of the first cover of the side cover portion.
FIG. 10 is a plan view of the first cover of the side cover portion.
FIG. 11 is a left side view of a second cover of the side cover portion.
FIG. 12 is a front view of the second cover of the side cover portion.
FIG. 13 is a plan view of the second cover of the side cover portion.
FIG. 14 is a left side view of the front portion of the saddle type vehicle.
FIG. 15 is a sectional view taken along line XV-XV shown in FIG. 14.
FIG. 16 is a sectional view taken along line XVI-XVI shown in FIG. 14.
FIG. 17 is a sectional view taken along line XVII-XVII shown in FIG. 14.
FIG. 18 is a sectional view taken along line XVIII-XVIII shown in FIG. 14.
FIG. 19 is a sectional view taken along line XIX-XIX shown in FIG. 14.
FIG. 20 is a sectional view taken along line XX-XX shown in FIG. 14.
FIG. 21 is a schematic view showing a state in which water having splattered outwardly in the vehicle width direction from a front wheel toward behind the front wheel is guided by the first cover and the second cover of the side cover portion.

### DETAILED DESCRIPTION OF THE PREFERRED EMBODIMENTS

Front-rear, up-down, and right-left directions mentioned in the following description are based on a basic posture equivalent to a state in which a saddle type vehicle 1 is traveling straight on a horizontal plane (a state in which a steering handle 7 is in a straight-traveling position) and based on the point of view of a driver when the driver faces forwardly. The right-left direction is equivalent to a vehicle width direction. "The center WO in the width direction" is equivalent to "a vertical plane that passes through the center line of a head tube 3 and that is perpendicular to the rotational axis of a rear wheel Wr." The saddle type vehicle 1 that is in the basic posture will be hereinafter described unless specific notice is given.

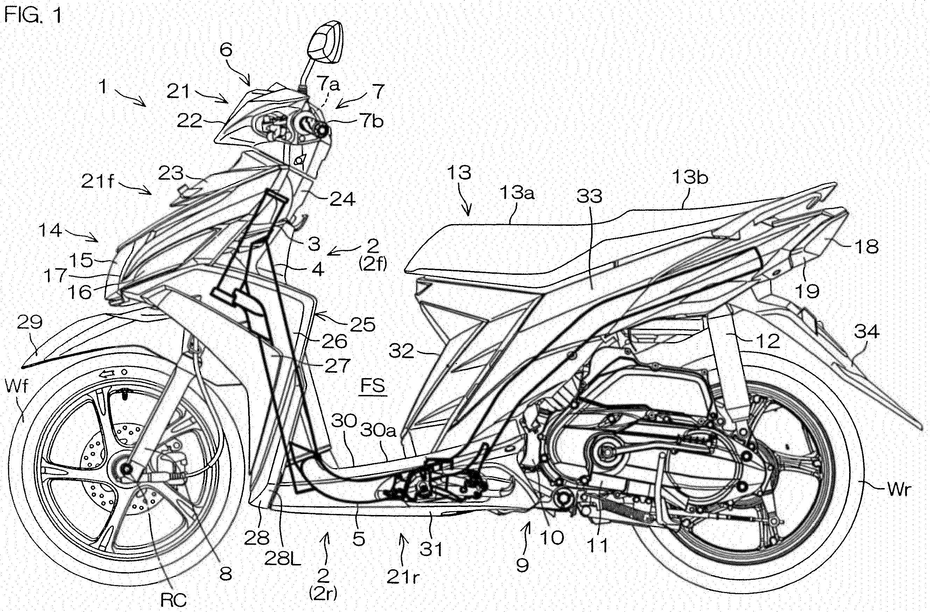

As shown in FIG. 1, the saddle type vehicle 1 includes a frame 2. In FIG. 1, to facilitate understanding, the frame 2 is shown by a thick solid line. The frame 2 includes a front frame 2f and a rear frame 2r disposed behind the front frame 2f. The front frame 2f includes a head tube 3 that extends rearward and upwardly, and a main frame 4 that extends rearward and downwardly from the head tube 3. The rear frame 2r includes a left-and-right pair of seat frames 5 that extend rearward and upwardly from the main frame 4. The pair of seat frames 5 are disposed on the right side and on the left side of the vehicle center WO, respectively.

As shown in FIG. 1, the saddle type vehicle 1 includes a steering device 6 supported by the frame 2, and a front wheel Wf rotatably supported by the steering device 6. The steering device 6 includes a steering handle 7 that is operated by a driver, and a front fork 8 that rotatably supports the front wheel Wf. The steering handle 7 includes a handle bar 7a disposed higher than the head tube 3, and two grips 7 attached to a right end portion and left end portion of the handle bar 7a, respectively. The steering handle 7 and the front fork 8 are supported by the head tube 3. The handle 7 and the front fork 8 are turnable about the center line of the head tube 3. When the steering handle 7 is turned, the front wheel Wf is turned rightward and leftward together with the steering handle 7. As a result, the saddle type vehicle 1 is steered.

As shown in FIG. 1, the saddle type vehicle 1 includes a swing unit 9 that generates power by which the saddle type vehicle 1 can travel and a rear wheel Wr rotatably supported by the swing unit 9. The swing unit 9 includes a power source 10 (internal combustion engine or electric motor) and a driving mechanism 11 that transmits the power of the power source 10 to the rear wheel Wr. The swing unit 9 is attached to the frame 2 via a pivot shaft extending in the vehicle width direction, and is swingable in the up-down direction about a pivot axis (center line of the pivot shaft) with respect to the frame 2. An upper end portion of a rear suspension 12 is attached to the frame 2, and a lower end portion of the rear suspension 12 is attached to the rear end portion of the swing unit 9. The rear wheel Wr is rotatably supported by the rear end portion (portion of the driving mechanism 11) of the swing unit 9. The rear wheel Wr is attached to the frame 2 via the pivot shaft and the swing unit 9. The rear wheel Wr is swingable in the up-down direction around the pivot axis together with the swing unit 9 with respect to the frame 2.

As shown in FIG. 1, the saddle type vehicle 1 includes a saddle type seat 13 disposed over the pair of seat frames 5. The seat 13 is disposed behind the head tube 3. The seat 13 is supported by the pair of seat frames 5 via a storage box (not shown) disposed between the pair of seat frames 5. The seat 13 may be for one person or for two persons. FIG. 1 shows an example where a driver seating surface 13a on which a driver sits and a passenger seating surface 13b on which a passenger sits are provided for the seat 13. The seat 13 may be directly supported by the frame 2, or may be supported by the frame 2 via another member other than the storage box.

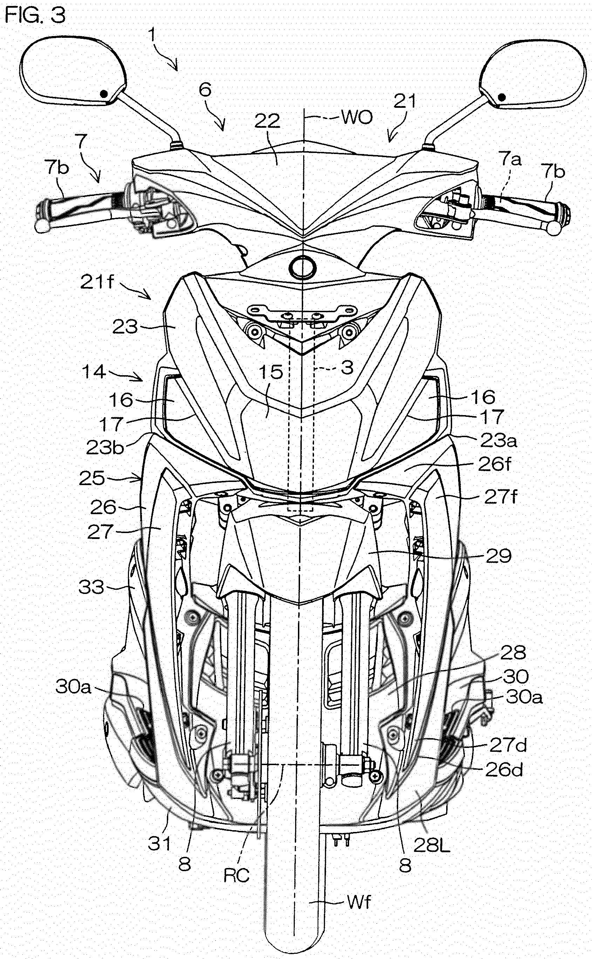

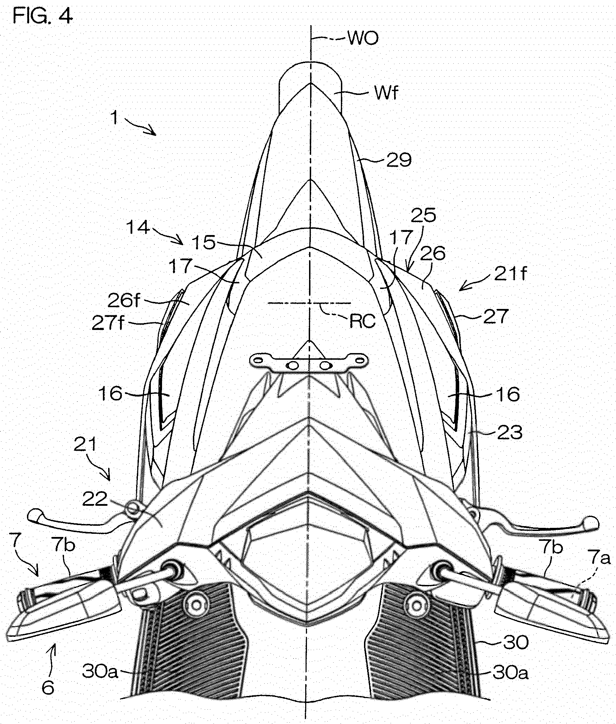

As shown in FIGS. 3 and 4, the saddle type vehicle 1 includes a head lamp 15 that overlaps with the vehicle center WO, two second side lamps (position lamps) 17 disposed on the right side and on the left side of the head lamp 15, respectively, and two first side lamps (flasher lamps) 16 disposed on the right side and on the left side of the two second side lamps 17, respectively. The head lamp 15, the first side lamps 16, and the second side lamps 17 are disposed higher than the front wheel Wf. As shown in FIG. 1, the saddle type vehicle 1 further includes a tail lamp 18 that overlaps with the vehicle center WO, and two rear flashers 19 disposed on the right side and on the left side of the tail lamp 18, respectively. The tail lamp 18 and the rear flashers 19 are disposed higher than the rear wheel Wr.

As shown in FIG. 1, the saddle type vehicle 1 includes an exterior cover 21 with which the frame 2 is covered. The exterior cover 21 includes a handle cover 22 with which the steering handle 7 is covered, a front fender 29 disposed over the front wheel Wf, a front frame cover 21f with which the front frame 2f is covered, a rear frame cover 21r with which the rear frame 2r is covered, and a rear fender 34 disposed over and behind the rear wheel Wr. The front fender 29 is connected to the front fork 8, and the front frame cover 21f, the rear frame cover 21 r, and the rear fender 34 are connected to the frame 2.

As shown in FIG. 1, the rear frame cover 21r includes a foot board 30 that extends rearward from the front frame cover 21f (specifically, a back cover 24 described below), an undercover 31 disposed under the foot board 30 and the seat frames 5, an under panel 32 that extends upwardly from the foot board 30 toward the seat 13, and a rear cover 33 disposed on the right side and on the left side of the pair of seat frames 5. The back cover 24 and the under panel 32 are spaced apart in the front-rear direction. The exterior cover 21 defines a foot space FS, in which the driver's feet and legs are disposed, between the back cover 24 and the under panel 32. As shown in FIG. 4, the foot board 30 includes a left-and-right pair of footrest portions 30a on which the feet of the driver sitting on the seat 13 are placed.

As shown in FIG. 3, the front frame cover 21f includes a front cover portion 23 that overlaps with the head tube 3 in a front view and includes left and right side ends 23a and 23b located further on the outer side in the vehicle width direction than the head tube 3. As shown in FIG. 1, the front frame cover 21f further includes a back cover portion 24 which is connected to the front cover portion 23 and a portion of which is located behind the head tube 3, two side cover portions 25 disposed on the right side and on the left side of the steering device 6, respectively, and an inner cover 28 disposed between the front wheel Wf and the back cover portion 24 in the front-rear direction (refer also to FIG. 3).

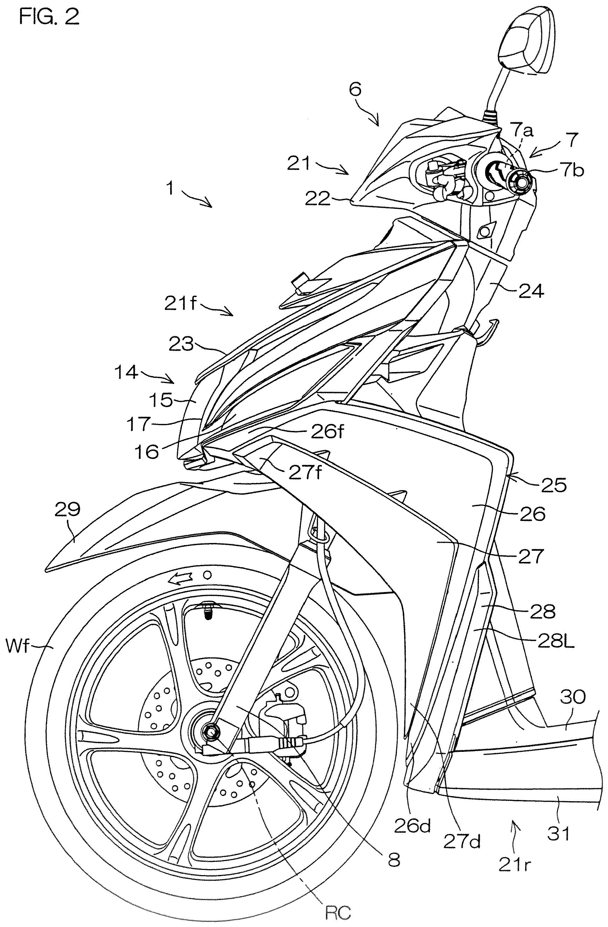

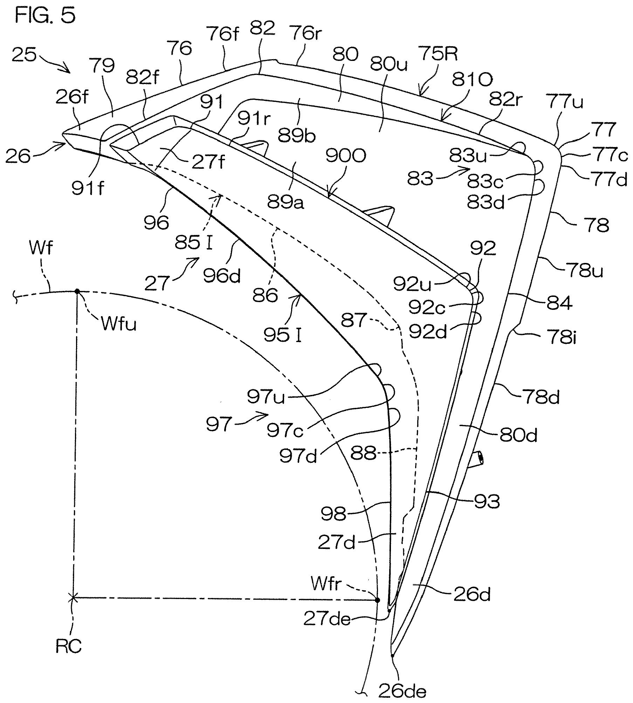

As shown in FIG. 3, the side cover portion 25 is located outside of the steering device 6 in the vehicle width direction. As shown in FIG. 2, the side cover portion 25 is connected to the lower edge of the front cover portion 23 and the side edge of the back cover portion 24. The side cover portion 25 extends downwardly from over the front wheel Wf in a side view such that the lower end of the side cover portion 25 is located under and behind the rear end Wfr (refer to FIG. 5) of the front wheel Wf. The side cover portions 25 include two first covers 26 disposed on the right side and on the left side of the front frame 2f, respectively, and two second covers 27 disposed outside of the two first covers 26 in the vehicle width direction.

As shown in FIG. 2, the front cover portion 23, the back cover portion 24, and the inner cover 28 are disposed between the two side cover portions 25. The front cover portion 23 is disposed over the front fender 29. The front cover portion 23 is disposed in front of the back cover portion 24. The back cover portion 24 extends upwardly from the foot board 30 to the handle cover 22. A side end portion 28L (right end portion or left end portion) of the inner cover 28 is disposed between the side cover portion 25 and the back cover portion 24 in a side view.

As shown in FIG. 2, the side cover portion 25, in a side view, extends downwardly and rearward from over the front wheel Wf, and then extends downwardly behind the front wheel Wf. The first cover 26 of the side cover portion 25 is partially covered with the second cover 27 in a side view. The first cover 26 and the second cover 27 both extend from a position that is over the front wheel Wf to a position that is behind the front wheel Wf, passing a position that is above and to the rear of the front wheel Wf in a side view. A front end portion 26f of the first cover 26 is disposed over the front wheel Wf, and a lower end portion 26d of the first cover 26 is disposed under and behind the rear end of the front wheel Wf. A front end portion 27f of the second cover 27 is disposed over the front wheel Wf, and a lower end portion 27d of the second cover 27 is disposed under and behind the rear end of the front wheel Wf.

As shown in FIG. 2, the first cover 26 of the side cover portion 25 extends rearward and downwardly from the front cover portion 23 in a side view. The front end portion 26f of the first cover 26 is disposed outside of the front cover portion 23 in the vehicle width direction, and overlaps with the front cover portion 23 in a side view. The front end portion 26f of the first cover 26 is disposed over the upper end Wfu (refer to FIG. 5) of the front wheel Wf in a side view. The front end portion 27f of the second cover 27 is disposed outside of the front end portion 26f of the first cover 26 in the vehicle width direction, and overlaps with the front end portion 26f of the first cover 26 in a side view.

Next, the side cover portion 25 will be described in detail.

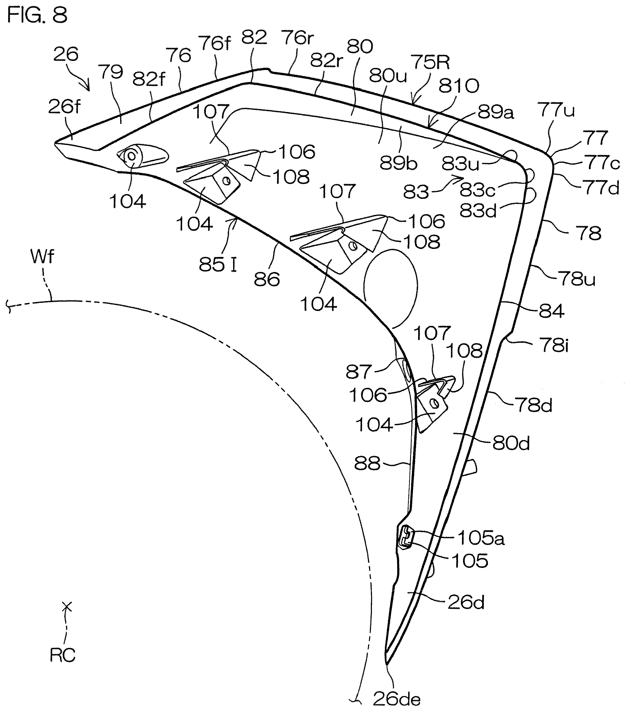

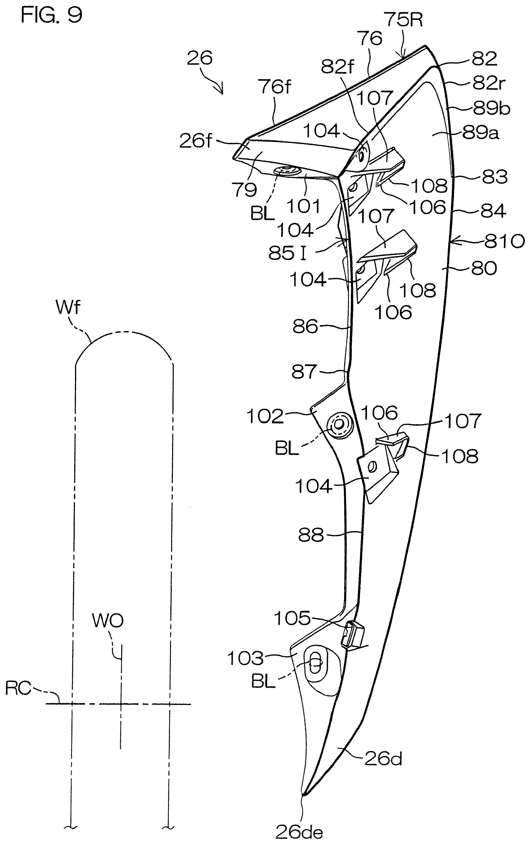

As shown in FIG. 8 and FIG. 9, the first cover 26 includes a rear end edge 75R connected to the front cover portion 23 and the back cover portion 24. An outer side surface of the first cover 26 includes a guide portion 80 that extends rearward and upwardly in a direction away from the vehicle center WO. The guide portion 80 includes a first inner end edge 851 that extends from over the front wheel Wf to behind the front wheel Wf and extends downwardly behind the front wheel Wf in a side view, and a first outer end edge 810 disposed further on the outer side in the vehicle width direction than the first inner end edge 85I in a front view. In FIG. 8 to FIG. 10, the rear end edge 75R of the first cover 26 and the first inner end edge 85I and the first outer end edge 810 of the guide portion 80 are shown by thick lines. The first inner end edge 85I of the guide portion 80 is a portion equivalent to the front end edge of the first cover 26. The first outer end edge 810 of the guide portion 80 is a portion equivalent to the outer end edge of the first cover 26.

As shown in FIG. 8, the rear end edge 75R of the first cover 26 extends from over the front wheel Wf to under and behind the rear end of the front wheel Wf, passing behind and over the front wheel Wf in a side view. Similarly, the first inner end edge 85I and the first outer end edge 810 of the guide portion 80 extend from over the front wheel Wf to under and behind the rear end of the front wheel Wf, passing behind and over the front wheel Wf in a side view. Respective portions of the first outer end edge 810 of the guide portion 80 are disposed at positions closer to a rotation center RC than the rear end edge 75R of the first cover 26 in a side view. Respective portions of the first inner end edge 85I of the guide portion 80 are disposed at positions closer to the rotation center RC than the first outer end edge 810 of the guide portion 80 in a side view.

As shown in FIG. 8, the rear end edge 75R of the first cover 26 includes an upper edge portion 76 that extends rearward from over the front wheel Wf in a side view, a bent portion 77 that is open forward and downward in a side view, and a lower edge portion 78 that extends from the bent portion 77 to under and behind the rear end of the front wheel Wf in a side view.

The upper edge portion 76 of the rear end edge 75R of the first cover 26 includes a front portion 76f that extends rearward and upwardly from over the front wheel Wf in a side view, and a rear portion 76r that extends rearward and downwardly from the rear end of the front portion 76f. The bent portion 77 of the rear end edge 75R of the first cover 26 includes an arc-shaped curve portion 77c that is open forward and downward in a side view, an upper portion 77u that extends forwardly and upwardly from the front end of the curve portion 77c in a side view, and a lower portion 77d that extends downwardly and forwardly from the lower end of the curve portion 77c in a side view. The lower edge portion 78 of the rear end edge 75R of the first cover 26 includes an upper portion 78u that extends downwardly and forwardly from the bent portion 77 in a side view, an intermediate portion 78i that extends downwardly and forwardly from the lower end of the upper portion 78u in a side view, and an lower portion 78d that extends downwardly and forwardly from the lower end of the intermediate portion 78i in a side view. The lower end of the lower edge portion 78, i.e., a lower end 26de of the first cover 26 is disposed lower than the rotation center RC of the front wheel Wf and the rear end of the front wheel Wf.

As shown in FIG. 8, the first outer end edge 810 of the guide portion 80 includes a first upper edge portion 82 that extends rearward from over the front wheel Wf in a side view, a first bent portion 83 that is open forward and downward in a side view, and a first lower edge portion 84 that extends downwardly and forwardly from the first bent portion 83 to behind and under the rear end of the front wheel Wf in a side view.

The first upper edge portion 82 of the first outer end edge 810 of the guide portion 80 includes a front portion 82f that extends rearward and upwardly from over the front wheel Wf in a side view, and a rear portion 82r that extends rearward and downwardly from the rear end of the front portion 82f in a side view. The first bent portion 83 of the first outer end edge 810 of the guide portion 80 includes an arc-shaped first curve portion 83c that is open forward and downward in a side view, a first upper portion 83u that extends forwardly and upwardly from the front end of the first curve portion 83c, and a first lower portion 83d that extends downwardly and forwardly from the lower end of the first curve portion 83c.

As shown in FIG. 8, the first inner end edge 85I of the guide portion 80 includes a first upper edge portion 86 that extends rearward and downwardly from over the front wheel Wf in a side view, a first bent portion 87 that is open forward and downward in a side view, and a first lower edge portion 88 that extends from the first bent portion 87 to under and behind the rear end of the front wheel Wf in a side view. The first upper edge portion 86 of the first inner end edge 85I is disposed under the first upper edge portion 82 of the first outer end edge 81O of the guide portion 80 in a side view. The first lower edge portion 88 of the first inner end edge 85I is disposed in front of the first lower edge portion 84 of the first outer end edge 81O of the guide portion 80 in a side view.

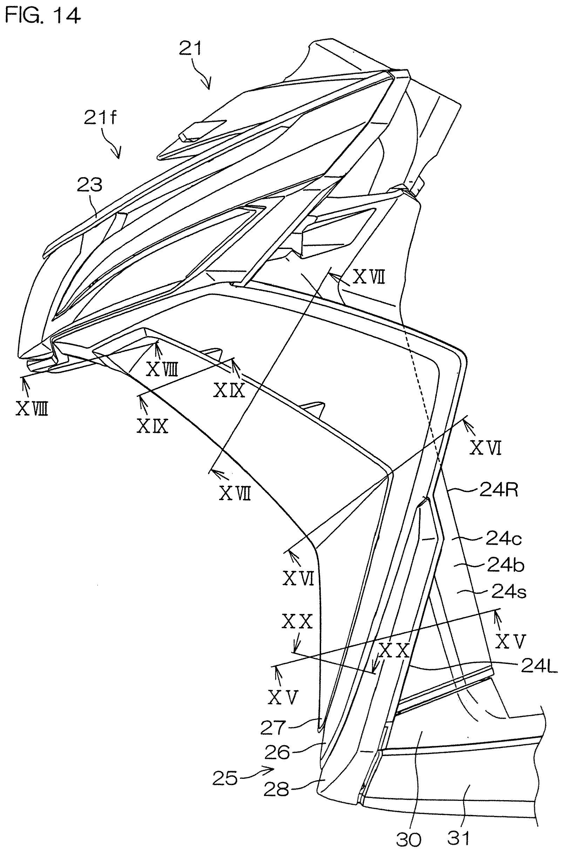

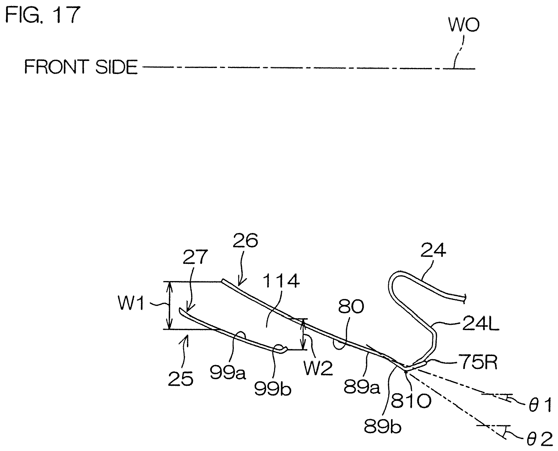

FIG. 17 is a sectional view taken along line XVII-XVII shown in FIG. 14. As shown in FIG. 17, the guide portion 80 includes a first inclined portion 89a that extends rearward in a direction away from the vehicle center WO, and a second inclined portion 89b that extends rearward from the first inclined portion 89a to the first outer end edge 810 of the guide portion 80 in a direction away from the vehicle center WO. An inclination angle θ2 of the second inclined portion 89b with respect to the vehicle center WO is greater than an inclination angle θ1 of the first inclined portion 89a with respect to the vehicle center WO. As shown in FIG. 8, the second inclined portion 89b is disposed higher than the first bent portion 83 of the first outer end edge 810 of the guide portion 80. The second inclined portion 89b extends along the first upper edge portion 82 of the first outer end edge 810 of the guide portion 80. Thus, the inclination angle of the guide portion 80 with respect to the vehicle center WO increases at the first upper edge portion 82 of the first outer end edge 81O of the guide portion 80.

As shown in FIG. 9, the front portion 76f of the upper edge portion 76 of the rear end edge 75R of the first cover 26 extends upward in a direction away from the vehicle center WO. The upper edge portion 76 is disposed inside of the first upper edge portion 82 of the first outer end edge 81O of the guide portion 80 in the vehicle width direction. On the other hand, the lower edge portion 78 (refer to FIG. 8) is hidden by the guide portion 80 in a front view. The lower edge portion 78 is located further on the inner side in the vehicle width direction than the rear portion 82r and the first lower edge portion 84 in terms of the same height.

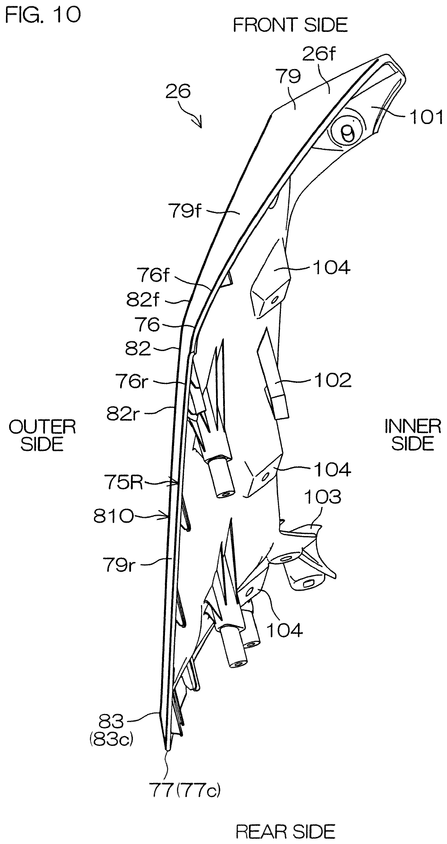

As shown in FIG. 10, the front portion 76f of the upper edge portion 76 of the rear end edge 75R of the first cover 26 extends rearward in a direction away from the vehicle center WO in a plan view. Similarly, the rear portion 76r of the upper edge portion 76 of the rear end edge 75R of the first cover 26 extends rearward in a direction away from the vehicle center WO in a plan view. The front portion 82f of the first outer end edge 81 O of the guide portion 80 is disposed outside of the front portion 76f in the vehicle width direction in a plan view. The front portion 82f extends rearward in a direction away from the vehicle center WO in a plan view. Similarly, the rear portion 82r of the first outer end edge 810 is disposed outside of the rear portion 76r in the vehicle width direction in a plan view, and extends rearward in a direction away from the vehicle center WO in a plan view.

As shown in FIG. 10, the inclination angle of the front portion 76f of the rear end edge 75R of the first cover 26 with respect to the vehicle center WO is greater than the inclination angle of the front portion 82f of the first outer end edge 810 of the guide portion 80 with respect to the vehicle center WO. The outer side surface of the first cover 26 includes a peripheral edge portion 79 disposed between the rear end edge 75R of the first cover 26 and the first outer end edge 810 of the guide portion 80. The peripheral edge portion 79 includes a front portion 79f that is reduced in width as it approaches the rear end of the first cover 26 and a rear portion 79r that extends rearward from the front portion 79f. The front portion 79f of the peripheral edge portion 79 is a portion that is located between the front portion 76f of the first cover 26 and the front portion 82f of the guide portion 80. The rear portion 79r of the peripheral edge portion 79 is a portion that is located between the rear portion 76r of the first cover 26, and the rear portion 82r of the guide portion 80.

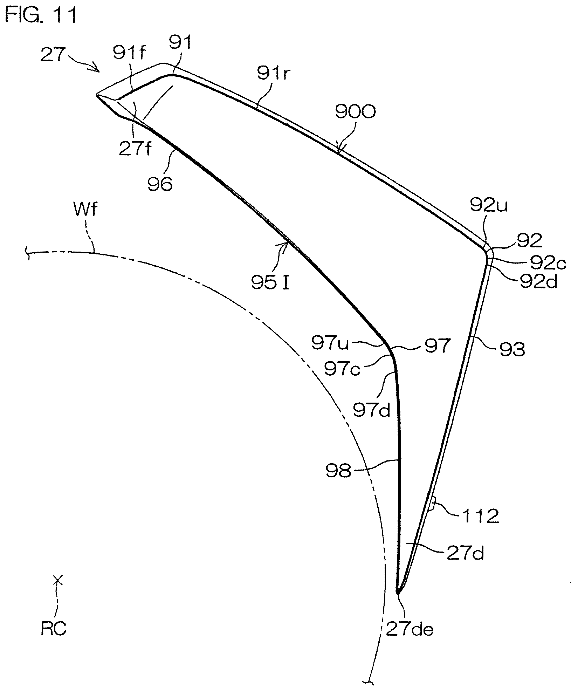

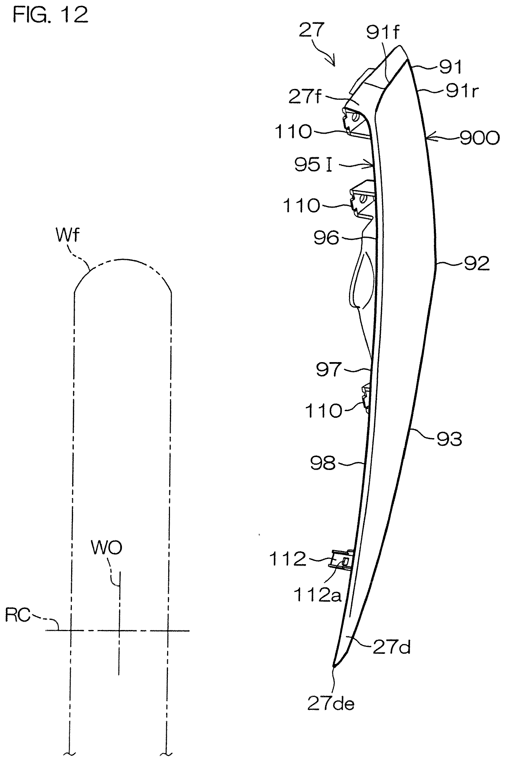

As shown in FIG. 11 and FIG. 12, the second cover 27 includes a second inner end edge 95I that extends from over the front wheel Wf to behind the front wheel Wf and extends downwardly behind the front wheel Wf, and a second outer end edge 900 disposed further on the outer side in the vehicle width direction than the second inner end edge 95I in a front view. In FIG. 11 to FIG. 13, the second outer end edge 900 and the second inner end edge 95I of the second cover 27 are shown by thick lines.

As shown in FIG. 11, the second outer end edge 900 of the second cover 27 extends from over the front wheel Wf to under and behind the rear end of the front wheel Wf, passing behind and over the front wheel Wf in a side view. Similarly, the second inner end edge 95I of the second cover 27 extends from over the front wheel Wf to under and behind the rear end of the front wheel Wf, passing behind and over the front wheel Wf in a side view. Respective portions of the second inner end edge 95I of the second cover 27 are disposed at positions closer to the rotation center RC than the second outer end edge 900 of the second cover 27 in a side view.

As shown in FIG. 11, the second outer end edge 900 of the second cover 27 includes a second upper edge portion 91 that extends rearward from over the front wheel Wf in a side view, a second bent portion 92 that is open forward and downward in a side view, and a second lower edge portion 93 that extends from the second bent portion 92 to under and behind the rear end of the front wheel Wf in a side view.

The second upper edge portion 91 of the second outer end edge 900 of the second cover 27 includes a front portion 91f that extends rearward and upwardly from over the front wheel Wf in a side view, and a rear portion 91 r that extends rearward and downwardly from the rear end of the front portion 91f in a side view. The second bent portion 92 of the second outer end edge 900 of the second cover 27 includes an arc-shaped curve portion 92c that is open forward and downward in a side view, an upper portion 92u that extends forwardly and upwardly from the front end of the curve portion 92c in a side view, and a lower portion 92d that extends downwardly and forwardly from the lower end of the curve portion 92c in a side view. The lower end of the second lower edge portion 93 of the second outer end edge 900 of the second cover 27, i.e., a lower end 27de of the second cover 27 is disposed lower than the rotation center RC of the front wheel Wf and the rear end of the front wheel Wf.

As shown in FIG. 11, the second inner end edge 95I of the second cover 27 includes a second upper edge portion 96 that extends rearward from over the front wheel Wf in a side view, a second bent portion 97 that is open forward and downward in a side view, and a second lower edge portion 98 that extends from the second bent portion 97 to behind the front wheel Wf in a side view.

The second bent portion 97 of the second inner end edge 95I of the second cover 27 includes an arc-shaped curve portion 97c that is open forward and downward in a side view, an upper portion 97u that extends forwardly and upwardly from the front end of the curve portion 97c in a side view, and a lower portion 97d that extends downwardly and forwardly from the lower end of the curve portion 83c in a side view. The second lower edge portion 98 of the second inner end edge 95I of the second cover 27 extends from the second bent portion 97 to behind and under the rear end of the front wheel Wf in a side view so as to approach the front wheel Wf as it approaches the lower end of the second inner end edge 95I of the second cover 27.

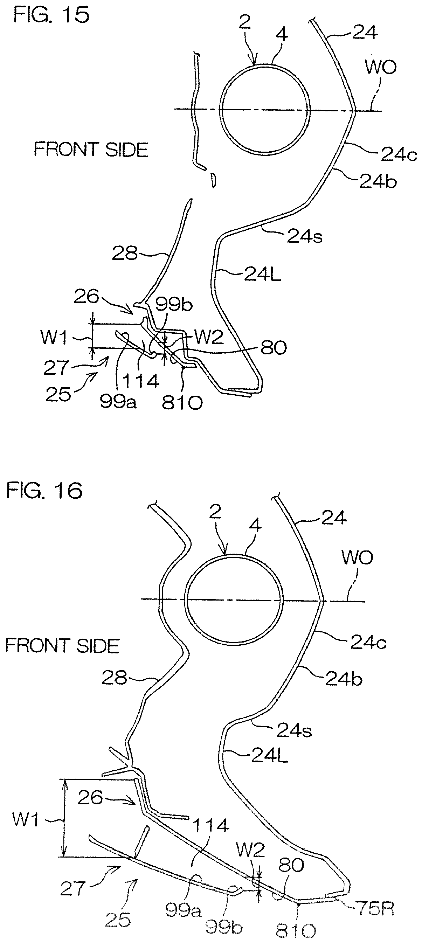

As shown in FIG. 15 to FIG. 17, an inner side surface of the second cover 27 includes an outward inclined portion 99a that extends rearward in a direction away from the vehicle center WO from the front end of the inner side surface of the second cover 27, and an inward inclined portion 99b that extends rearward in a direction that approaches to the vehicle center WO from the outward inclined portion 99a to the rear end of the inner side surface of the second cover 27. The outward inclined portion 99a and the inward inclined portion 99b are inclined in mutually opposite directions with respect to the vehicle center WO. The inward inclined portion 99b is shorter in the front-rear direction than the outward inclined portion 99a.

Next, a method for attaching the first cover 26 and the second cover 27 will be described.

The first cover 26 includes a plurality of inner attaching portions which are fixed to the front cover portion 23 or the inner cover portion 28. As shown in FIG. 9, the plurality of inner attaching portions include a first attaching portion 101 that is fixed to the front cover portion 23 by a bolt BL being an example of a fastening member, a second attaching portion 102 that is fixed to the inner cover 28 by a bolt BL, and a third attaching portion 103 that is fixed to the inner cover 28 by a bolt BL. The first attaching portion 101, the second attaching portion 102, and the third attaching portion 103 all project inwardly in the vehicle width direction from the first inner end edge 85I of the guide portion 80. The first attaching portion 101 is disposed higher than the second attaching portion 102, and the second attaching portion 102 is disposed higher than the third attaching portion 103.

The first cover 26 further includes a plurality of outer attaching portions to which the second cover 27 is fixed. As shown in FIG. 8, the plurality of outer attaching portions include a plurality of (for example, four) recess portions 104 recessed from the guide portion 80, and an insertion hole 105 that penetrates through the guide portion 80 in the thickness direction of the guide portion 80. The four recess portions 104 are respectively disposed at different heights. The insertion hole 105 is disposed lower than the four recess portions 104. The recess portion 104 includes a bottom surface in which a bolt insertion hole that penetrates through the guide portion 80 in the thickness direction of the guide portion 80 is disposed.

As shown in FIG. 8, the first cover 26 further includes a plurality of (for example, three) chevron plates 106 projecting from the guide portion 80. The three chevron plates 106 correspond to three recess portions 104 excluding the uppermost recess portion 104, respectively. The chevron plates 106 each include an upper plate 107 that extends rearward from over to behind the recess portion 104 in a side view, and a lower plate 108 that extends downwardly and forwardly from the rear end edge of the upper plate 107 in a side view. The upper plate 107-portion and the lower plate 108-portion are disposed in a V-shape.

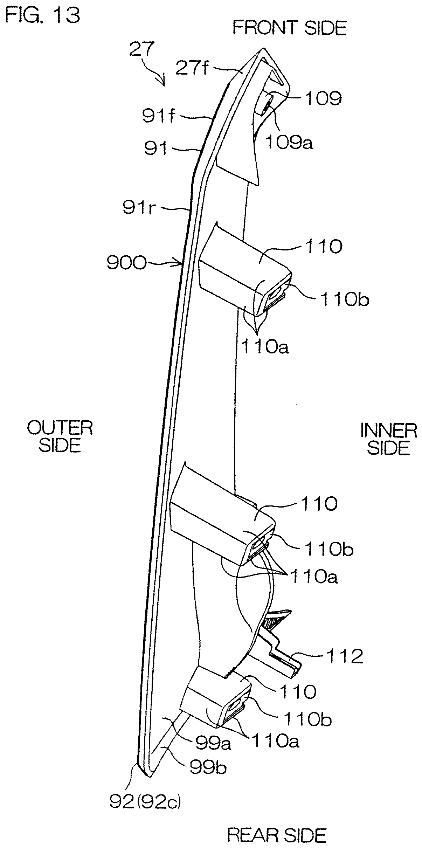

As shown in FIG. 13, the second cover 27 includes four projection portions (one columnar projection portion 109 and three prism-shaped projection portions 110) that are fixed to the four recess portions 104 of the first cover 26 by four bolts, and an inserting portion 112 that is inserted into the insertion hole 105 of the first cover 26. The four projection portions are respectively disposed at different heights. The inserting portion 112 is disposed lower than the four projection portions. The four projection portions include a columnar projection portion 109 and three prism-shaped projection portions 110. The columnar projection portion 109 is disposed higher than the three prism-shaped projection portions 110. The columnar projection portion 109 includes an inner peripheral surface at which a female screw 109a is provided. The prism-shaped projection portions 110 each include three peripheral walls 110a disposed in a U-shape, and an upper wall 110b coupled to a distal end portion of each peripheral wall 110a.

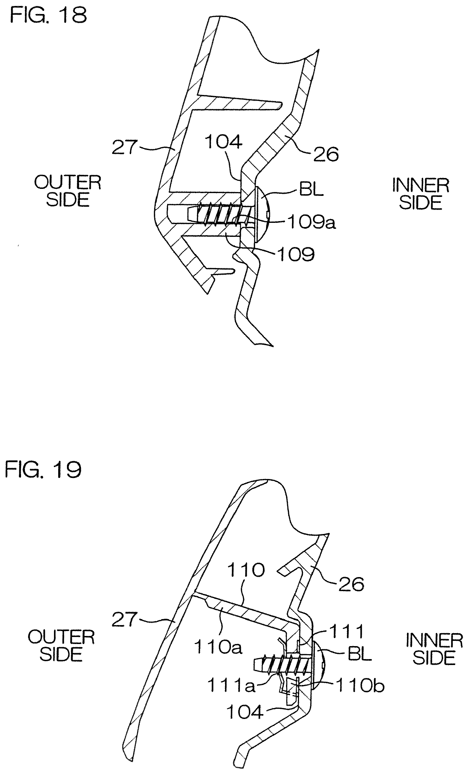

FIG. 18 is a sectional view taken along line XVIII-XVIII shown in FIG. 14. As shown in FIG. 18, the uppermost projection portion (columnar projection portion 109) is inserted in the uppermost recess portion 104. A shaft portion of the bolt BL is inserted in the bolt insertion hole of the recess portion 104 from inside in the vehicle width direction. A head portion of the bolt BL is disposed inside of the first cover 26 in the vehicle width direction. The shaft portion of the bolt BL is inserted in the female screw 109a provided in the columnar projection portion 109. The first cover 26 and the second cover 27 are thereby fastened.

FIG. 19 is a sectional view taken along line XIX-XIX shown in FIG. 14. As shown in FIG. 19, the remaining three projection portions (prism-shaped projection portions 110) are inserted in the remaining three recess portions 104, respectively. The upper wall 110b of the prism-shaped projection portion 110 is disposed on the bottom surface of the recess portion 104 via a U-shaped fixing member 111 in which a screw hole 111 a is provided. A shaft portion of the bolt BL is inserted in the bolt insertion hole of the recess portion 104 from inside in the vehicle width direction. A head portion of the bolt BL is disposed inside of the first cover 2 in the vehicle width direction 6. The shaft portion of the bolt BL penetrates through the upper wall 110b of the prism-shaped projection portion 110 and the fixing member 111 in the axial direction of the bolt BL. The shaft portion of the bolt BL is inserted in the screw hole 111 a provided in the fixing member 111. The first cover 26 and the second cover 27 are thereby fastened.

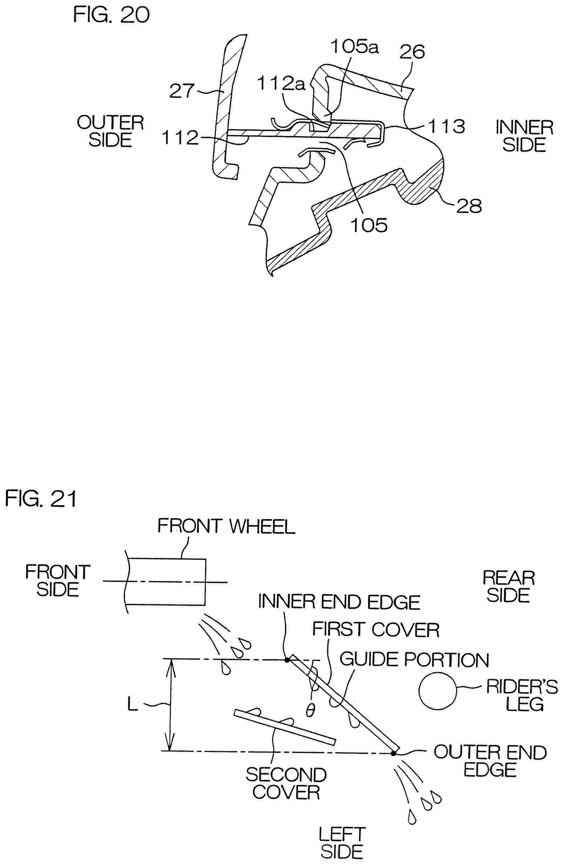

FIG. 20 is a sectional view taken along line XX-XX shown in FIG. 14. As shown in FIG. 20, the inserting portion 112 of the second cover 27 is inserted in the insertion hole 105 of the first cover 26. The inserting portion 112 includes a recess portion 112a (refer also to FIG. 12). A portion of the inner peripheral surface of the insertion hole 105 defines a projection 105a (refer also to FIG. 8) projecting toward the center of the insertion hole 105. The projection 105a of the insertion hole 105 is disposed in the recess portion 112a of the inserting portion 112. Further, a leaf spring 113 is interposed between the inserting portion 112 and the insertion hole 105. The leaf spring 113 is interposed between the inserting portion 112 and the insertion hole 105 in an elastically deformed state. The inserting portion 112 is held in the insertion hole 105 by a restoring force of the leaf spring 113. A movement of the second cover 27 relative to the first cover 26 is thereby restrained.

As shown in FIG. 15 to FIG. 17, the second cover 27 is fixed to the first cover 26 with the whole of the inner side surface of the second cover 27 being separated from the guide portion 80 of the first cover 26. The first cover 26 and the second cover 27 define a passage 114 between the guide portion 80 of the first cover 26 and the inner side surface of the second cover 27. The passage 114 extends rearward in a direction away from the vehicle center WO, and is inclined with respect to the vehicle center WO. The width W1 (length at the front end of the passage 114 in the vehicle width direction) at the front end of the passage 114 is greater than the width W2 (length at the rear end of the passage 114 in the vehicle width direction) at the rear end of the passage 114.

Next, the position of the first cover 26 and the second cover 27 will be described.

As shown in FIG. 5, the second cover 27 is disposed outside of the guide portion 80 in the vehicle width direction so as to overlap with the first inner end edge 85I of the guide portion 80 in a side view. At least a portion of the second inner end edge 95I of the second cover 27 is disposed in front of the first inner end edge 85I of the guide portion 80 in a side view. If it is a position behind the front wheel Wf and the same in height, the second inner end edge 95I of the second cover 27 is disposed in front of the first inner end edge 85I of the first cover 26. Also, the second inner end edge 95I of the second cover 27 extends from a position over the front wheel Wf to a position behind and under the rear end of the front wheel Wf at a position close to the rotation center RC as compared with the first inner end edge 851 of the first cover 26. The second outer end edge 900 of the second cover 27 extends from a position over the front wheel Wf to a position behind and under the rear end of the front wheel Wf at a position distant from the rotation center RC in a side view as compared with the first inner end edge 851 of the guide portion 80. The second outer end edge 900 intersects the first inner end edge 851 at a position lower than the rear end of the front wheel Wf. The second outer end edge 900 extends from a position over the front wheel Wf to a position behind and under the rear end of the front wheel Wf at a position close from the rotation center RC in a side view as compared with the first outer end edge 810 of the guide portion 80. Respective portions of the second outer end edge 900 are disposed at positions close from the rotation center RC in a side view as compared with the first outer end edge 810. The lower end 27de of the second cover 27 is disposed further to the front than the lower end 26de of the first cover 26.

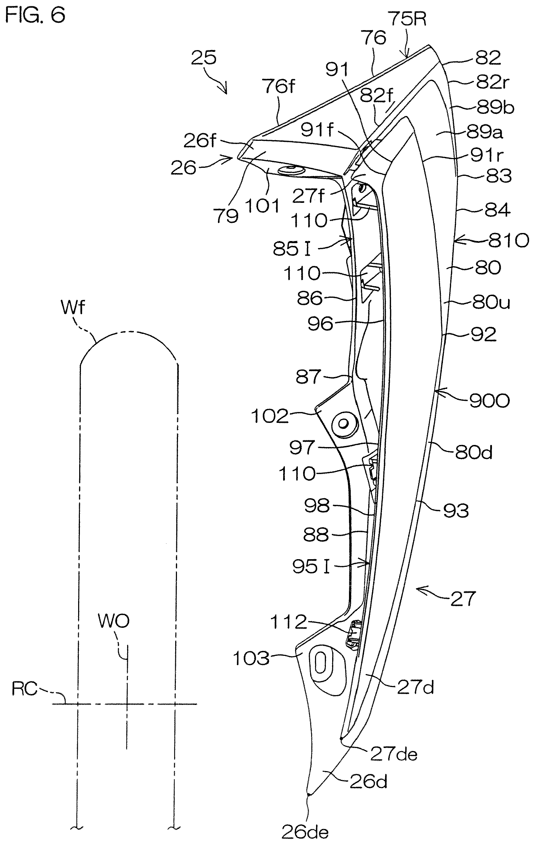

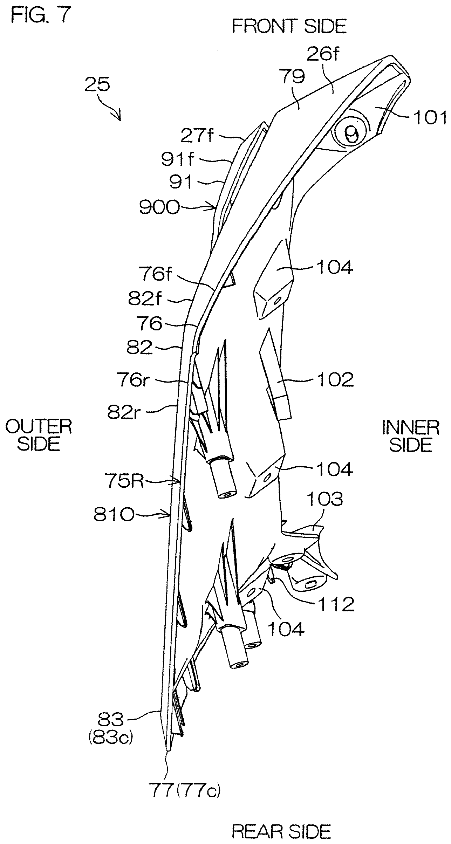

As shown in FIG. 6, at least a portion of the second inner end edge 95I of the second cover 27 is disposed outside of the first inner end edge 85I of the guide portion 80 in the vehicle width direction in a front view. At least a portion of the second outer end edge 900 of the second cover 27 is disposed inside of the rear portion 82r and the first lower edge portion 84 in the vehicle width direction in a front view. The first upper edge portion 82 of the first outer end edge 810 of the guide portion 80 is located further on the outer side in the vehicle width direction than the lower end 27de of the second cover 27. As shown in FIG. 7, the front portion 91f of the second cover 27 is disposed outside of the front portion 82f of the guide portion 80 in the vehicle width direction in a plan view. The front portion 91f of the second cover 27 is disposed further to the rear than the front end of the first outer end edge 810 of the guide portion 80 in a plan view.

As shown in FIG. 5, the guide portion 80 includes an upper portion 80u that is higher than the second bent portion 92 of the second cover 27, and a lower portion 80d that is lower than the second bent portion 92 of the second cover 27. The upper portion 80u and the lower portion 80d of the guide portion 80 are both partially covered with the second cover 27 in a side view. The upper portion 80u of the guide portion 80 includes an upper covered portion covered with the second cover 27 in a side view, and an upper exposed portion not covered with the second cover 27 in a side view. Similarly, the lower portion 80d of the guide portion 80 includes a lower covered portion covered with the second cover 27 in a side view, and a lower exposed portion not covered with the second cover 27 in a side view. The upper exposed portion is larger than the lower exposed portion. Thus, the exposed area of the upper portion 80u of the guide portion 80 in a side view is greater than the exposed area of the lower portion 80d of the guide portion 80 in a side view.

As shown in FIG. 15 and FIG. 16, the back cover portion 24 includes a central portion 24c located behind the main frame 4, and two lateral portions 24L disposed on the right side and on the left side of the central portions 24c, respectively. The central portion 24c includes a rear wall portion 24b disposed further to the rear than the main frame 4, and two side wall portions 24s disposed on the right side and on the left side of the main frame 4, respectively. The lateral portion 24L extends outwardly in the vehicle width direction from the outer end of the side wall portion 24s. The driver's legs are disposed behind the lateral portions 24L serving as leg shields. As shown in FIG. 14, the rear end edge 75R of the first cover 26 and the first outer end edge 810 of the guide portion 80 intersect a rear end edge 24R of the central portion 24c of the back cover portion 24 in a side view. The bent portion 77 of the rear end edge 75R of the first cover 26 is disposed further to the rear than the rear end edge 24R of the back cover portion 24. Similarly, the first bent portion 83 of the first outer end edge 810 of the guide portion 80 is disposed further to the rear than the rear end edge 24R of the back cover portion 24.

As above, in the present preferred embodiment, the second cover 27 is provided so as to overlap with the first inner end edge 85I of the guide portion 80 of the first cover 26 in a side view, and the second inner end edge 95I of the second cover 27 is located further on the outer side in the vehicle width direction than the first inner end edge 85I of the guide portion 80. Therefore, as schematically shown in FIG. 21, water splattering outwardly and rearward from the front wheel Wf is captured by the inner side surface of the second cover 27. Water that reaches the guide portion 80 of the side cover portion 25 can thereby be reduced.

Also, because the second cover 27 can also capture water, it is not necessary to locate the first inner end edge 85I of the guide portion 80 outside in the vehicle width direction in order to capture more water splattering outwardly and rearward from the front wheel Wf. Therefore, because the dimension L in the vehicle width direction (refer to FIG. 21) from the first inner end edge 85I of the guide portion 80 to the first outer end edge 810 of the guide portion 80 can be relatively large, the first cover 26 can be formed into a shape to easily discharge water (for example, a shape in which the guide portion 80 has a great angle θ with respect to the front-rear direction).

Water that reaches the guide portion 80 of the first cover 26 of the side cover portion 25 can thus be reduced, and the first cover 26 of the side cover portion 25 can be formed into a shape to easily discharge water, so that water that is directed toward the rider's leg can be reduced.

Also, the second outer end edge 900 of the second cover 27 is located between the first outer end edge 810 of the guide portion 80 and the second inner end edge 95I of the second cover 27 in a side view, and the first outer end edge 810 of the guide portion 80 is not covered with the second cover 27 in a side view. Thereby, the saddle type vehicle 1 is unlikely to be increased in size in the vehicle width direction even if the second cover 27 is provided. Accordingly, water that is directed toward the rider's leg can be reduced, and the saddle type vehicle 1 can be made compact in the vehicle width direction.

Also, in the present preferred embodiment, the first bent portion 83 is disposed outside of the rider's leg in the vehicle width direction, because the first bent portion 83 is disposed at the rear such that the first outer end edge 810 of the guide portion 80 intersects the rear end edge 24R of the back cover portion 24 in a side view. Therefore, as compared to when the first bent portion 83 is disposed in front of the rider's leg, water flowing rearward along the side cover portion 25 is unlikely to be directed toward the rider's leg. Also, it is particularly difficult to form the first cover 26 into a shape to easily discharge water, when the first bent portion 83 is located at the rear and the first inner end edge 85I of the guide portion 80 is located outside in the vehicle width direction,. This is, for example, because the inclination angle θ of the guide portion 80 with respect to the vehicle center WO is reduced. However, because the first inner end edge 85I of the guide portion 80 can be located relatively inside in the vehicle width direction, the first cover 26 can be formed into a shape to easily discharge water.

Also, in the present preferred embodiment, the first lower edge portion 84 of the first outer end edge 810 of the guide portion 80 extends downwardly from the first bent portion 83 of the first outer end edge 810 of the guide portion 80. The first lower portion 83d of the first bent portion 83 extends downwardly and forwardly in a side view. Thus, even when the first bent portion 83 of the first outer end edge 810 of the guide portion 80 is located at the rear, the first lower edge portion 84 of the first outer end edge 810 of the guide portion 80 can be located at the front. A lower portion of the first cover 26 can thereby be made close to the front wheel, and the layout performance of the vehicle body can be improved. Thus, for example, when the rider places his/her leg in the foot space FS or takes his/her leg out of the foot space FS, the first cover 26 and the like is unlikely to serve as an obstacle. Moreover, even if the layout performance is thus improved, because the second cover 27 is provided, water can be suppressed from reaching the guide portion 80. Further, because the first bent portion 83 is located at the rear, water is unlikely to splash the rider.

Also, in the present preferred embodiment, the second lower edge portion 98 of the second inner end edge 95I of the second cover 27 approaches the front wheel Wf as it approaches the lower end of the second inner end edge 95I. Water kicked up by the front wheel Wf falls due to gravity, while splattering rearward. Thus, the second cover 27 can efficiently capture water splattering rearward from the front wheel Wf, and water that reaches the guide portion 80 of the first cover 26 can be reduced.

Also, in the present preferred embodiment, the first upper edge portion 82 of the first outer end edge 810 of the guide portion 80 is disposed further on the outer side in the vehicle width direction than the lower end 27d of the second cover 27. A portion of the water flowing along the guide portion 80 of the first cover 26 splatters toward a position higher than the rider's knee from the first upper edge portion 82 of the first outer end edge 810 of the guide portion 80. In the present preferred embodiment, because the first upper edge portion 82 of the first outer end edge 810 of the guide portion 80 is disposed relatively on the outer side, it is easy to discharge water directed toward a position higher than the rider's knee from the first upper edge portion 82 of the first outer end edge 810 of the guide portion 80, toward the outer side in the vehicle width direction. Thus, water that splatters toward a position higher than the rider's knee can be reduced.

Also, in the present preferred embodiment, the exposed area of the upper portion 80u of the guide portion 80 in a side view is greater than the exposed area of the lower portion 80d of the guide portion 80 in a side view. In other words, because the second cover 27 needs not cover the upper portion of the first cover 26, the second cover 27 can be made compact. On the other hand, because the lower portion of the first cover 26 in which water flowing down from the upper portion of the first cover 26 is likely to gather is covered with the second cover 27, water that splatters toward the rider's leg can be efficiently reduced.

Also, in the present preferred embodiment, water flowing rearward along the guide portion 80 flows through the first inclined portion 89a and the second inclined portion 89b of the guide portion 80 in this order, and is discharged rearward from the first outer end edge 810 of the guide portion 80. Because the inclination angle of the second inclined portion 89b with respect to the vehicle center WO is great, water flowing rearward along the guide portion 80 is guided by the second inclined portion 89b in a direction away from the rider's leg. Thus, water that is directed toward the rider's leg can be further reduced.

Although preferred embodiments have been described above, the present teaching is not restricted to the contents of the preferred embodiments and various modifications of the embodiments are possible.

For example, a description has been given of an example in which the head lamp 15, the first side lamps 16, and the second side lamps 17 are integrated. However, the head lamp 15, the first side lamps 16, and the second side lamps 17 may be separated, or only two types of the head lamp 15, the first side lamps 16, and the second side lamps 17 may be integrated.

A description has been given of an example in which the saddle type vehicle 1 is a scooter type motorcycle equipped with the swing unit 9, and the power source 10 is swingable with respect to the frame 2. However, the saddle type vehicle 1 may be an underbone type motorcycle in which the power source 10 is fixed to the frame 2.

A description has been given for the side cover portion 25 of an example extending to behind and under the rear end of the front wheel Wf. However, it suffices that the side cover portion 25, in a side view, extends downwardly from over the front wheel Wf such that at least a portion of the side cover portion 25 is located behind the front wheel Wf. For example, the side cover portion 25 may partially overlap with the front wheel Wf in a side view. At least one of the lower end portion 26d of the first cover 26 and the lower end portion 27d of the second cover 27 may overlap with the front wheel Wf in a side view. Also, the side cover portion 25 may not extend to a position lower than the rear end of the front wheel Wf. In other words, the lower end of the side cover portion 25 in a side view may be disposed at a height equal to that of the rear end of the front wheel Wf or a height higher than that of the rear end of the front wheel Wf.

The method for attaching the first cover 26 and the second cover 27 is not limited to the above, and can be variously selected.

The second inner end edge has been disposed at a position closer to the rotation center RC of the front wheel Wf than the first inner end edge, however, the second inner end edge may be disposed at a position to overlap with the first inner end edge. That is, because water can be captured by the inner side surface of the second cover even when the second inner end edge is disposed at a position to overlap with the first inner end edge, water that reaches the guide portion can be reduced, while the side cover portion can be made compact in the vehicle width direction.

It is not always necessary to provide the rear end edge 75R of the first cover 26. That is, the rear end edge 75R may coincide with the first outer end edge 810 of the guide portion 80.

The second cover 27 does not need to cover the whole of the first inner end edge, and may cover only a portion thereof.

A description has been given for the side cover portion 25 of an example connected to the lower edge of the front cover portion 23 and the side edge of the back cover portion 24. However, the side cover portion 25 may be connected to other portions of the front cover portion 23 and the back cover portion 24, or may be connected to either the front cover portion 23 or the back cover portion 24.

A description has been given of an arrangement in which the front cover portion 23, the back cover portion 24, and the side cover portion 25 are separate from each other. However, two or more of the front cover portion 23, the back cover portion 24, and the side cover portion 25 may be integral. Each of the front cover portion 23, the back cover portion 24, and the side cover portion 25 may be divided into a plurality of parts.

Features of two or more of the various preferred embodiments described above may be combined.

## Claims

1. A saddle type vehicle (1) comprising:
a frame (2) that includes a front frame (2f) including a head tube (3) and a rear frame (2r) extending rearward from the front frame (2f);
a steering device (6) that is supported by the head tube (3);
a front wheel (Wf) that is supported by the steering device (6);
an exterior cover (21) that includes a front frame cover (21f) covering a periphery of the front frame (2f); and
a seat (13) that is supported by the rear frame (2r) such that the seat (13) is disposed at a more rearward position than the steering device (6), wherein
the front frame cover (21f) includes:
a front cover portion (23) that overlaps with the head tube (3) in a front view and includes a side end (23a, 23b) located at a more outward position in a vehicle width direction than the head tube (3);
a back cover portion (24) that is connected to the front cover portion (23), and at least a portion of which is located behind the head tube (3); and
a side cover portion (25) that is located outside of the steering device (6) in the vehicle width direction and that is connected to at least one of the front cover portion (23) and the back cover portion (24) and that extends downwardly from over the front wheel (Wf) such that at least a portion of the side cover portion (25) is located behind the front wheel (Wf) in a side view,
the side cover portion (25) includes:
a first cover (26) that includes a guide portion (80) including a first inner end edge (85I) and a first outer end edge (81O), the first inner end edge (85I) extending from over the front wheel (Wf) to behind the front wheel (Wf) in a side view, the first inner end edge (85I) extending downwardly behind the front wheel (Wf) in a side view, the first outer end edge (81O) being disposed at a more outward position in the vehicle width direction than the first inner end edge (85I) in a front view; and
a second cover (27) that is disposed outside of the guide portion (80) in the vehicle width direction,
the first outer end edge (81O) of the guide portion (80) includes:
a first upper edge portion (82) extending rearward from over the first inner end edge (851) of the guide portion (80) in a side view;
a first bent portion (83) connected to a rear end of the first upper edge portion (82) and
bent downwardly; and
a first lower edge portion (84) connected to a lower end of the first bent portion (83) and extending downwardly to behind the first inner end edge (851) of the guide portion (80) in a side view, and
the second cover (27) includes:
a second inner end edge (951) extending from over the front wheel (Wf) to behind the front wheel (Wf) in a side view and extending downwardly behind the front wheel (Wf) in a side view; and
a second outer end edge (900) disposed at a more outward position in the vehicle width direction than the second inner end edge (951) in a front view,
**characterized in that**
the second cover (27) overlaps with the first inner end edge (851) of the guide portion (80) in a side view, and
the second inner end edge (951) is a front end edge of the second cover (27), and
the second inner end edge (95I) is located at a more outward position in the vehicle width direction than the first inner end edge (851) of the guide portion (80) in a front view, and
the second outer end edge (900) is disposed between the second inner end edge (951) and the first outer end edge (810) of the guide portion (80) in a side view.

2. A saddle type vehicle (1) according to claim 1, **characterized in that** the second outer end edge (900) of the second cover (27) is disposed at a more inward position in the vehicle width direction than the first outer end edge (810) of the guide portion (80) in a front view.

3. A saddle type vehicle (1) according to claim 1 or 2, **characterized in that** the first bent portion (83) of the first outer end edge (810) of the guide portion (80) is disposed at a more rearward position than a rear end edge (24R) of the back cover portion (24) in a side view.

4. A saddle type vehicle (1) according to any one of claims 1 to 3, **characterized in that** the first bent portion (83) of the first outer end edge (810) of the guide portion (80) includes an upper portion (83u) extending rearward in a side view and a lower portion (83d) extending downwardly and forwardly in a side view.

5. A saddle type vehicle (1) according to any one of claims 1 to 4, **characterized in that** the second inner end edge (95I) of the second cover (27) includes:
a second upper edge portion (96) extending rearward from over the front wheel (Wf) in a side view;
a second bent portion (97) connected to a rear end of the second upper edge portion (96) and bent downwardly; and
a second lower edge portion (98) extending downwardly behind the front wheel (Wf) from the second bent portion (97) in a side view such that the second lower edge portion (98) approaches the front wheel (Wf) as the second lower edge portion (98) approaches a lower end (27de) of the second inner end edge (95I).

6. A saddle type vehicle (1) according to any one of claims 1 to 5, **characterized in that** the first upper edge portion (82) of the first outer end edge (810) of the guide portion (80) is disposed at a more outward position in the vehicle width direction than a lower end (27de) of the second cover (27).

7. A saddle type vehicle (1) according to any one of claims 1 to 6, **characterized in that** the first cover (26) further includes an upper portion (80u) and a lower portion (80d) each partially covered with the second cover (27) in a side view and
an exposed area of the upper portion (80u) in a side view is greater than an exposed area of the lower portion (80d) in a side view.

## Patentansprüche

1. Ein Sattel-Typ-Fahrzeug (1), das umfasst:
einen Rahmen (2), der einen vorderen Rahmen (2f), der ein Kopfrohr (3) beinhaltet, und einen hinteren Rahmen (2r), der sich nach hinten von dem vorderen Rahmen (2f) erstreckt, beinhaltet;
eine Lenkvorrichtung (6), die durch das Kopfrohr (3) gelagert ist;
ein Vorderrad (Wf), das durch die Lenkvorrichtung (6) gelagert ist;
eine Außenabdeckung (21), welche eine Vorder-Rahmen-Abdeckung (21f) beinhaltet, die einen Umfang des vorderen Rahmens (2f) abdeckt;
einen Sitz (13), der durch den hinteren Rahmen (2r) gelagert ist, sodass der Sitz (13) an einer weiter hinten liegenden Position positioniert ist als die Lenkvorrichtung (6), wobei
die Vorder-Rahmen-Abdeckung (21) beinhaltet:
einen Vorder-Abdeck-Abschnitt (23), der, in einer Vorder-Ansicht, mit dem Kopfrohr überlappt, und der ein Seitenende (23a, 23b) beinhaltet, dass in einer Fahrzeug-Breiten-Richtung an einer weiter außenliegenden Position als das Kopfrohr (3) angeordnet ist;
einen Rück-Abdeck-Abschnitt (24), der mit dem Vorder-Abdeck-Abschnitt (23) verbunden ist, und zumindest ein Abschnitt desselben ist, hinter dem Kopfrohr (3) angeordnet; und
einen Seiten-Abdeck-Abschnitt (25), der, in einer Fahrzeug-Breiten-Richtung, außerhalb der Lenkvorrichtung (6) angeordnet ist, und der mit zumindest einem von dem Vorder-Abdeck-Abschnitt (23) und dem Rück-Abdeck-Abschnitt (24) verbunden ist, und der sich nach unten von oberhalb des Vorderrads (Wf) erstreckt, so dass zumindest ein Abschnitt des Seiten-Abdeck-Abschnitts (25), in einer Seiten-Ansicht, hinter dem Vorderrad (Wf) angeordnet ist;
der Seiten-Abdeck-Abschnitt (25) beinhaltet:
eine erste Abdeckung (26), die einen Führungsabschnitt (80) beinhaltet, der eine erste innere Endkante (25i) und eine erste äußere Endkante (810) beinhaltet, die erste innere Endkante (25i) erstreckt sich, in einer Seiten-Ansicht, von oberhalb des Vorderrads (Wf) nach hinten von dem Vorderrad (Wf), die erste innere Endkante (25i) erstreckt sich, in einer Seiten-Ansicht, nach unten hinter das Vorderrad (Wf), die erste äußere Endkante (81O) ist, in einer Vorder-Ansicht, an einer weiter außenliegenden Position in der Fahrzeug-Breiten-Richtung positioniert als die erste innere Endkante (85i); und
eine zweite Abdeckung (27), die außerhalb des Führungsabschnitts (80), in der Fahrzeugbreitrichtung, positioniert ist,
die erste äußere Endkante (810) des Führungsabschnitts (80) beinhaltet:
einen ersten oberen Kantenabschnitt (82), der sich, in einer Seiten-Ansicht, nach hinten von oberhalb der ersten inneren Endkante (85i) des Führungsabschnitts (80) erstreckt;
einen ersten Biegeabschnitt (83), der mit einem hinteren Ende des ersten oberen Kantenabschnitts (82) verbunden ist, und nach unten gebogen ist; und
einen ersten unteren Kantenabschnitt (84), der mit einem unteren Ende des ersten Biegeabschnitts (83) verbunden ist und sich, in einer Seiten-Ansicht, nach unten nach hinten zu der ersten inneren Endkante (85) des Führungsabschnitts (80) erstreckt, und
die zweite Abdeckung (27) beinhaltet:
eine zweite innere Endkante (95i), die sich, in einer Seiten-Ansicht, von oberhalb des Vorderrads (Wf) nach hinten von dem Vorderrad (Wf) erstreckt, und sich nach unten hinter das Vorderrad (Wf) erstreckt; und
eine zweite äußere Endekante (900), die, in einer Vorder-Ansicht, an einer weiter außerliegenden Position in der Fahrzeug-Breiten-Richtung positioniert ist als die zweite innere Endekante (95i),
**dadurch gekennzeichnet, dass**
die zweite Abdeckung (27), in einer Seiten-Ansicht, mit der ersten inneren Endkante (95i) des Führungsabschnitts (80) überlappt, und
die zweite innere Endkante (95i) eine vordere Endkante der zweiten Abdeckung (27) ist, und die zweite innere Endkante (95i) ist, in einer Vorder-Ansicht, an einer weiter außenliegenden Position in der Fahrzeug-Breiten-Richtung angeordnet als die erste innere Endkante (85i) des Führungsabschnitts (80), und
die zweite äußere Endkante (900) ist, in einer Seiten-Ansicht, zwischen der zweiten inneren Endkante (95i) und der ersten äußeren Endkante (810) des Führungsabschnitts (80) positioniert.

2. Ein Sattel-Typ-Fahrzeug (1) gemäß Anspruch 1, **dadurch gekennzeichnet, dass** die zweite äußere Endkante (900) der zweiten Abdeckung (27), in einer Vorder-Ansicht, an einer weiter innenliegenden Position in der Fahrzeug-Breiten-Richtung positioniert ist als die erste äußere Endkante (810) des Führungsabschnitts (80).

3. Ein Sattel-Typ-Fahrzeug (1) gemäß Anspruch 1 oder 2, **dadurch gekennzeichnet, dass** der erste Biegeabschnitt (83) der ersten äußeren Endkante (810) des Führungsabschnitts (80), in einer Seiten-Ansicht, an einer weiter hinten liegenden Position positioniert ist als eine hintere Endkante (24r) des Rück-Abdeck-Abschnitts (24).

4. Ein Sattel-Typ-Fahrzeug (1) gemäß irgendeinem der Ansprüche 1 bis 3, **dadurch gekennzeichnet, dass** der erste Biegeabschnitt (83) der ersten äußeren Endkante (810) des Führungsabschnitts (80) einen oberen Abschnitt (83u) beinhaltet, der sich, in einer Seiten-Ansicht, nach hinten erstreckt, und einen unteren Abschnitt (83d) beinhaltet, der sich, in einer Seiten-Ansicht, nach unten und nach vorne erstreckt.

5. Ein Sattel-Typ-Fahrzeug (1) gemäß irgendeinem der Ansprüche 1 bis 4, **dadurch gekennzeichnet, dass** die zweite innere Endkante (95i) der zweiten Abdeckung (27) beinhaltet:
einen zweiten oberen Kantenabschnitt (96), der sich, in einer Seiten-Ansicht, nach hinten von oberhalb des Vorderrads (Wf) erstreckt,
einen zweiten Biegeabschnitt (97), der mit einem hinteren Ende des zweiten oberen Kantenabschnitts (96) verbunden ist und nach unten gebogen ist; und
einen zweiten unteren Kantenabschnitt (98), der sich, in einer Seiten-Ansicht, nach unten hinter das Vorderrad (Wf) von dem zweiten Biegeabschnitt (97) erstreckt, so dass der zweite untere Kantenabschnitt (98) das Vorderrad (Wf) erreicht, wenn der zweite untere Kantenabschnitt (98) ein unteres Ende (27de) der zweiten inneren Endkante (95i) erreicht.

6. Ein Sattel-Typ-Fahrzeug (1) gemäß irgendeinem der Ansprüche 1 bis 5, **dadurch gekennzeichnet, dass** der erste obere Kantenabschnitt (82) der ersten äußeren Endkante (810) des Führungsabschnitts (80), in der Fahrzeug-Breiten-Richtung, an einer weiter außenliegenden Position positioniert ist als ein unteres Ende (27de) der zweiten Abdeckung (27).

7. Ein Sattel-Typ-Fahrzeug (1) gemäß irgendeinem der Ansprüche 1 bis 6, **dadurch gekennzeichnet, dass** die erste Abdeckung (26) weiterhin einen oberen Abschnitt (80u) und einen unteren Abschnitt (80d) beinhaltet, die, in einer Seiten-Ansicht, jede teilweise mit der zweiten Abdeckung (27) abgedeckt sind, und, in einer Seiten-Ansicht, ist ein freiliegender Bereich des oberen Abschnitts (80u) in einer Seiten-Ansicht größer als ein freiliegender Bereich des unteren Abschnitts (80d).

## Revendications

1. Véhicule à selle (1) comprenant :
un châssis (2) qui inclut un châssis avant (2f) comportant un tube de tête (3) et un châssis arrière (2r) qui s'étend vers l'arrière depuis le châssis avant (2f) ;
un dispositif de direction (6) qui est supporté par le tube de tête (3) ;
une roue avant (Wf) qui est supportée par le dispositif de direction (6) ;
un carénage extérieur (21) qui comprend un carénage de châssis avant (21f) recouvrant une périphérie du châssis avant (2f) ; et
un siège (13) qui est supporté par le châssis arrière (2r) de telle sorte que le siège (13) est agencé à une position plus à l'arrière que le dispositif de direction (6), dans lequel
le carénage de châssis avant (21f) comprend :
une portion de carénage avant (23) qui chevauche le tube de tête (3) en vue de face et qui comprend une extrémité latérale (23a, 23b) située à une position plus à l'extérieur en direction de la largeur du véhicule que le tube de tête (3) ;
une portion de carénage arrière (24) qui est connectée à la portion de carénage avant (23), et au moins une portion qui est située derrière le tube de tête (3) ; et
une portion de carénage latéral (25) qui est située à l'extérieur du dispositif de direction (6) en direction de la largeur du véhicule et qui est connectée à au moins une portion parmi la portion de carénage avant (23) et la portion de carénage arrière (24) et qui s'étend vers le bas depuis le dessus de la roue avant (Wf) de telle sorte qu'au moins une portion de la portion de carénage latéral (25) se trouve derrière la roue avant (Wf) en vue de côté,
la portion de carénage latéral (25) comprend :
un premier carénage (26) qui inclut une portion guide (80) comportant un premier bord d'extrémité interne (851) et un premier bord d'extrémité externe (810), le premier bord d'extrémité interne (851) s'étendant depuis le dessus de la roue avant (Wf) jusque derrière la roue avant (Wf) en vue de côté, le premier bord d'extrémité interne (85I) s'étendant vers le bas derrière la roue avant (Wf) en vue de côté, le premier bord d'extrémité externe (810) étant agencé dans une position plus à l'extérieur en direction de la largeur du véhicule que le premier bord d'extrémité interne (851) en vue de face ; et
un deuxième carénage (27) qui est agencé à l'extérieur de la portion guide (80) en direction de la largeur du véhicule,
le premier bord d'extrémité externe (810) de la portion guide (80) comprend :
une première portion de bord supérieur (82) qui s'étend vers l'arrière depuis le dessus du premier bord d'extrémité interne (851) de la portion guide (80) en vue de côté ;
une première portion pliée (83) connectée à une extrémité arrière de la première portion de bord supérieur (82) et pliée vers le bas ; et
une première portion de bord inférieur (84) connectée à une extrémité inférieure de la première portion pliée (83) et s'étendant vers le bas depuis derrière le premier bord d'extrémité interne (851) de la portion guide (80) en vue de côté, et
le deuxième carénage (27) comprend :
un deuxième bord d'extrémité interne (951) s'étendant depuis le dessus de la roue avant (Wf) jusque derrière la roue avant (Wf) en vue de côté, et s'étendant vers le bas derrière la roue avant (Wf) en vue de côté ; et
un deuxième bord d'extrémité externe (900) agencé dans une position plus à l'extérieur en direction de la largeur du véhicule que le deuxième bord d'extrémité interne (951) en vue de face,
**caractérisé en ce que**
le deuxième carénage (27) chevauche le premier bord d'extrémité interne (851) de la portion guide (80) en vue de côté, et
le deuxième bord d'extrémité interne (951) est un bord d'extrémité avant du deuxième carénage (27), et le deuxième bord d'extrémité interne (951) est agencé dans une position plus à l'extérieur en direction de la largeur du véhicule que le premier bord d'extrémité interne (851) de la portion guide (80) en vue de face, et
le deuxième bord d'extrémité externe (900) est agencé entre le deuxième bord d'extrémité interne (951) et le premier bord d'extrémité externe (810) de la portion guide (80) en vue de côté.

2. Véhicule à selle (1) selon la revendication 1, **caractérisé en ce que** le deuxième bord d'extrémité externe (900) du deuxième carénage (27) est agencé à une position plus à l'intérieur en direction de la largeur du véhicule que le premier bord d'extrémité externe (810) de la portion guide (80) en vue de face.

3. Véhicule à selle (1) selon la revendication 1 ou 2, **caractérisé en ce que** la première portion pliée (83) du premier bord d'extrémité externe (810) de la portion guide (80) est agencée à une position plus à l'arrière qu'un bord d'extrémité arrière (24R) de la portion de carénage arrière (24) en vue de côté.

4. Véhicule à selle (1) selon l'une quelconque des revendications 1 à 3, **caractérisé en ce que** la première portion pliée (83) du premier bord d'extrémité externe (810) de la portion guide (80) comprend une portion supérieure (83u) qui s'étend vers l'arrière en vue de côté et une portion inférieure (83d) qui s'étend vers le bas et vers l'avant en vue de côté.

5. Véhicule à selle (1) selon l'une quelconque des revendications 1 à 4, **caractérisé en ce que** le deuxième bord d'extrémité interne (951) du deuxième carénage (27) comprend :
une deuxième portion de bord supérieur (96) qui s'étend vers l'arrière depuis le dessus de la roue avant (Wf) en vue de côté ;
une deuxième portion pliée (97) connectée à une extrémité arrière de la deuxième portion de bord supérieur (96) et pliée vers le bas ; et
une deuxième portion de bord inférieur (98) qui s'étend vers le bas derrière la roue avant (Wf) depuis la deuxième portion pliée (97) en vue de côté de telle sorte que la deuxième portion de bord inférieur (98) s'approche de la roue avant (Wf) alors que la deuxième portion de bord inférieur (98) s'approche d'une extrémité inférieure (27de) du deuxième bord d'extrémité interne (95I).

6. Véhicule à selle (1) selon l'une quelconque des revendications 1 à 5, **caractérisé en ce que** la première portion de bord supérieur (82) du premier bord d'extrémité externe (810) de la portion guide (80) est agencée à une position plus à l'extérieur en direction de la largeur du véhicule qu'une extrémité inférieure (27de) du deuxième carénage (27).

7. Véhicule à selle (1) selon l'une quelconque des revendications 1 à 6, **caractérisé en ce que**
le premier carénage (26) comprend en outre une portion supérieure (80u) et une portion inférieure (80d) chacune partiellement recouverte par le deuxième carénage (27) en vue de côté, et
une zone exposée de la portion supérieure (80u) en vue de côté est plus grande qu'une zone exposée de la portion inférieure (80d) en vue de côté.
